# EUROPÄISCHE PATENTANMELDUNG

(11) **EP 1 702 520 A1**
(43) Veröffentlichungstag der Anmeldung: **20.09.2006**
(21) Anmeldenummer: 06005130.7
(22) Anmeldetag: 14.03.2006
(51) Int. Cl.: A23N 12/02

(54) **Bürsten- Wasch- und Poliermaschine für Feldfrüchte**

(30) Priorität: 17.03.2005 DE 102005012850
(71) Anmelder: Schneider Fördertechnik GmbH, 78667 Villingendorf (DE)
(72) Erfinder: Schneider, Alfred, 88214 Ravensburg (DE)
(74) Vertreter: Neymeyer, Franz

(57) **Zusammenfassung**

Die Erfindung betrifft eine Vorrichtung (80) zum Reinigen von Feldfrüchten bestehend aus mehreren, eine Transportbahn bildenden, in einer Durchlaufrichtung der Feldfrüchte hintereinander liegenden Bürstenwalzen (65, 65/1, 65/2, 65/3, 65/4, 65/5, 65/6, 65/7, 65/8, 65/9, 65/10, 65/11, 65/12, 65/13), welche drehend antreibbar sind und welche in einer Ausgangsstellung in einer gemeinsamen Horizontalebene (70) liegen. Um die Durchlaufmenge und den Reinigungsgrad der zu reinigenden Feldfrüchte möglichst optimal einstellen zu können ist erfindungsgemäß vorgesehen, dass die Bürstenwalzen (65 bis 65/13) einzeln oder in Gruppen aus der Horizontalebene (70) vertikal verstellbar sind.

## Beschreibung

Die Erfindung betrifft eine Vorrichtung zum Reinigen von Feldfrüchten bestehend aus mehreren, eine Transportbahn bildenden, in einer Durchlaufrichtung der Feldfrüchte hintereinander liegenden Bürstenwalzen, welche drehend antreibbar sind und welche in einer Ausgangsstellung in einer gemeinsamen Horizontalebene liegen.

Vorrichtungen der gattungsgemäßen Art sind schon seit langem beispielsweise aus der US 2 081 489 bekannt. Diese bestehen aus mehreren Bürstenwalzen, welche eine Transportbahn bilden. Dabei ist der Durchmesser der Bürstenwalzen derart gewählt, dass sich die benachbarten Bürsten gegenseitig leicht berühren oder einen nicht veränderbaren Spalt zueinander aufweisen. Im Betrieb werden diese Bürstenwalzen drehend in Transportrichtung angetrieben, so dass zu reinigende Feldfrüchte, wie beispielsweise Karotten, Kartoffeln und dgl., durch die Bürstenwalzen in Durchlaufrichtung von einer Bürstenwalze zur nächsten transportiert werden. Dabei werden die Feldfrüchte während dieses Transportes durch die Borsten der Bürstenwalzen gereinigt.

Bei den bekannten Vorrichtungen sind die Bürstenwalzen in einem Grundgestell mit den Enden ihrer Antriebswellen drehbar gelagert. Diesen Bürstenwalzen ist ein gemeinsamer Antriebsmotor zugeordnet, welcher die Bürstenwalzen gleichförmig beispielsweise über eine Kettentrieb in gleicher Drehrichtung antreibt. Die Antriebsgeschwindigkeit bzw. Drehgeschwindigkeit der Bürstenwalzen ist unterschiedlich einstellbar, wodurch die Transportgeschwindigkeit in Durchlaufrichtung beeinflußbar ist. In ihrer Ausgangsstellung können dabei alle Bürstenwalzen in einer gemeinsamen Horizontalebene liegen. Um einen besseren Reinigungsgrad zu erreichen, können die Bürstenwalzen auch in einer geneigten Ebene angeordnet sein.

Weiter ist es allgemein aus dem Stand der Technik bekannt, dass die Bürstenwalzen gemeinsam mit ihrem Rahmengestell aus der Horizontalebene ihrer Ausgangsstellung geneigt werden können, um einerseits die Transportgeschwindigkeit und andererseits die Reinigungswirkung variabel einstellen zu können. Zur Erhöhung der Reinigungswirkung werden die Transportwalzen dabei so verschwenkt, dass diese eine Steigung bilden, so dass die zu reinigenden Feldfrüchte bei vorgegebener Bürstendrehzahl langsamer transportiert werden und somit einen längeren Zeitraum in der Vorrichtung verbleiben. Weiter ist es aus der US 2 081 489 auch bekannt, einen zusätzlichen Satz von sog. Oberbürsten vorzusehen, um den Anpressdruck auf die Feldfrüchte zu erhöhen, wodurch ebenfalls die Reinigungswirkung erhöht wird.

Die drehende Kopplung der Bürstenwalzen kann dabei über Kettentriebe erfolgen, wobei unterschiedliche Drehzahlen der Bürstenwalzen durch den Einsatz verschieden großer Kettenräder erreichbar ist. Dies bedingt allerdings stets einen aufwändigen Umbau der bekannten Vorrichtung.

Wenn man von der Verschwenkbarkeit bei einigen bekannten Vorrichtungen absieht, so sind diese Vorrichtungen an die Erfordernisse einer Reinigung von Feldfrüchten nur äußerst aufwändig anpassbar.

Der Erfindung liegt demgemäß die Aufgabe zugrunde, eine Vorrichtung der gattungsgemäßen Art zu schaffen, mit welcher in einfacher Weise die Durchlaufmenge und der Reinigungsgrad der zu reinigenden Feldfrüchte einstellbar ist.

Die Aufgabe wird erfindungsgemäß zusammen mit den Merkmalen des Oberbegriffes des Anspruches 1 dadurch gelöst, dass die Bürstenwalzen einzeln oder in Gruppen aus der Horizontalebene vertikal verstellbar sind.

Durch die erfindungsgemäße Ausgestaltung wird eine Vorrichtung zur Verfügung gestellt, welche äußerst einfach an die Erfordernisse der Reinigung von Feldfrüchten anpassbar ist.

Durch diese Ausgestaltung ist in äußerst einfacher Art und Weise die Reinigungswirkung wie auch die Transportgeschwindigkeit der Feldfrüchte einstellbar. Wird beispielsweise eine zwischen zwei benachbarten Bürstenwalzen sitzende Bürstenwalze vertikal abgesenkt, so bildet sich hier eine Vertiefung, so dass die auf diese abgesenkte Bürstenwalze gelangenden Feldfrüchte länger in diesem Bereich verbleiben und somit die Reinigungswirkung erhöht wird. Dadurch wird auch gleichzeitig die Transportgeschwindigkeit verringert. Die vertikale Verstellung der Bürstenwalzen kann, je nach den Anforderungen, auch Gruppenweise um denselben Betrag erfolgen.

Anstatt lediglich eine der Bürstenwalzen abzusenken, können auch mehrere hintereinander liegende Bürstenwalzen vertikal abgesenkt werden, so dass sich insgesamt auf der gesamten Länge der Transportbahn eine oder mehrere Mulden bilden, und sich insbesondere dadurch in beliebiger Form eine Änderung der Behandlungsdauer und des Bürstenwinkels ergibt.

Dabei können die Bürstenwalzen gemäß Anspruch 2 mit den Enden ihrer Antriebswelle jeweils in einem vertikal verlaufenden Stellprofil drehbar gelagert sein. Dieses Stellprofil ist dabei in den Seitenwänden eines Grundgestells vertikal verstellbar aufgenommen. Diese Stellprofile sind äußerst einfach herstellbar, wobei auch die Einzelverstellung in vertikaler Richtung äußerst einfach durchführbar ist.

Zur präzisen Führung der Stellprofile können dabei die Seitenwände gemäß Anspruch 3 aus einem oberen und einem unteren Längsprofil gebildet sein. Die vertikale Führung der Stellprofile zwischen diesem oberen und unteren Längsprofil erfolgt durch vertikal verlaufende Führungsprofile, zwischen welchen die Stellprofile vertikal verstellbar geführt werden. Damit ist insbesondere eine äußerst einfache Montage und gleichzeitig sichere Führung der Stellprofile gewährleistet.

Zur einfachen Vertikalverstellung kann gemäß Anspruch 4 vorgesehen sein, dass zwischen diesen Führungsprofilen Spindelantriebe vorgesehen sind, welche in den oberen Längsprofilen drehbar gelagert sind. Mit diesen Spindelantrieben steht das jeweilige Stellprofil in Wirkverbindung, so dass durch Betätigen des Spindelantriebes das jeweilige Stellprofil vertikal verstellt ist.

Gemäß Anspruch 5 können diese Spindelantriebe eine Stellspindel aufweisen, welche die oberen Längsprofile von unten nach oben durchragen. Dabei ist auf das obere Ende der Stellspindel, welche vertikal nach oben das obere Längsprofil durchragt, ein manuell oder mechanisch betätigbares Antriebselement aufsetzbar. D.h., dass die Vertikalverstellung in einfachster Weise manuell durchführbar ist. Als Antriebselement kann hier beispielsweise eine einfache, auf das obere Ende der Stellspindel aufsetzbare und mit der Stellspindel in drehfeste Verbindung bringbare Handkurbel vorgesehen sein. Alternativ zur der Handkurbel kann auch ein motorischer Antrieb, beispielsweise in Form eines elektrischen oder hydraulischen Drehantriebes als mechanisches Antriebselement für die Stellspindeln vorgesehen

Da die Bürstenwalzen mit ihren beiden Enden ihrer Antriebswellen jeweils in einem Stellprofil aufgenommen sind und jedes der Stellprofile mit einer solchen Stellspindel versehen ist, kann gemäß Anspruch 6 vorgesehen sein, dass die beiden Stellspindeln der beiden die Enden der Antriebswelle aufnehmenden Stellprofile zur gleichzeitigen Vertikalverstellung über einen Kettentrieb, einen Zahnriementrieb oder ein Winkelgetriebe miteinander gekoppelt sind. Durch diese Ausgestaltung ist jede der Bürstenwalzen mit ihren Enden ihrer Antriebswellen gleichzeitig vertikal verstellbar, so dass stets eine horizontale Ausrichtung der Antriebswelle, selbst beim Verstellvorgang, gewährleistet ist.

Weiter kann gemäß Anspruch 7 vorgesehen sein, dass über den Kettentrieb, den Zahnriementrieb oder das Winkelgetriebe die Stellspindeln zweier benachbarter Bürstenwalzen gleichzeitig antreibbar sind. Durch diese Ausgestaltung sind beispielsweise die beiden benachbarten Bürstenwalzen gleichzeitig um denselben Betrag vertikal verstellbar. Dies kann vorteilhaft sein, sofern zwischen zwei vertikal höher liegenden Bürstenwalzen ein größerer Aufnahmeraum für Feldfrüchte zur Verfügung zu stellen ist. Zwischen diesen beiden vertikal höher liegenden Bürstenwalzen können durch die Ausgestaltung gemäß Anspruch 7 zwei zwischen diesen liegenden Bürstenwalzen gleichzeitig vertikal um denselben Betrag verstellt werden.

Gemäß Anspruch 8 kann vorgesehen sein, dass die Bürstenwalzen einzelne oder gruppenweise durch einen separaten Antriebsmotor drehend angetrieben ist. Durch diese Ausgestaltung sind die Bürstenwalzen unabhängig voneinander oder gruppenweise antreibbar, so dass insbesondere über den kompletten Förderweg in Durchlaufrichtung unterschiedliche Drehgeschwindigkeiten der Bürstenwalzen einstellbar sind. Auch durch diese Ausgestaltung ist die Reinigungswirkung in einfacher Weise beeinflußbar. als Antriebsmotoren können hier Elektromotoren oder auch Hydraulikmotoren vorgesehen sein.

Zur Steuerung der Drehzahl der Antriebsmotoren können diese, gemäß Anspruch 9, mit einem Frequenzumformer ausgestattet sein, wobei die Antriebsmotoren in diesem Falle als Elektromotoren ausgebildet sind.

Durch diesen Frequenzumformer sind die Antriebsmotoren gemäß Anspruch 10 bezüglich ihrer Drehgeschwindigkeit sowie ihrer Drehrichtung separat ansteuerbar. Eine derartige Steuerung kann auch für Hydraulikmotoren vorgesehen sein, wobei hier die aus dem Stand der Technik hinreichend bekannten Bau- und Steuerungselement einzusetzen sind.

Zusammenfassend ist festzustellen, dass durch die erfindungsgemäße Ausgestaltung eine Vorrichtung zum Reinigen von Feldfrüchten zur Verfügung gestellt wird, welche in einfacher Weise wirkungsvoll auf die unterschiedlichen Anforderungen zur Reinigung von Feldfrüchten einstellbar ist. Durch die separate, vertikale Verstellbarkeit ist insbesondere auch ein Spalt zwischen den benachbarten Bürstenwalzen einstellbar, so dass hier beispielsweise während des Reinigungsyorganges Feldfrüchte unterschiedlicher Größe aussortierbar sind, indem der Spalt zwischen den benachbarten Bürstenwalzen auf eine entsprechende Größe eingestellt wird.

Anhand der Zeichnung wird nachfolgend ein Ausführungsbeispiel der Erfindung näher erläutert. Es zeigt:
- Fig. 1: eine Verstellvorrichtung der erfindungsgemäßen Art in perspektivischer Explosionsdarstellung;
- Fig. 2: eine perspektivische Darstellung einer Seitenwand einer erfindungsgemäßen Vorrichtung;

- Fig. 3: ein Grundgestell der erfindungsgemäßen Vorrichtung, bestehend aus zwei spiegelsymmetrisch angeordneten Seitenwänden in perspektivischer Darstellung;
- Fig. 4: einen vergrößerten Ausschnitt der vorderen Seitenwand aus Fig. 3 mit zwei eingebauten Verstellvorrichtungen aus Fig. 1;
- Fig. 5: einen frontalen Teilschnitt einer eingebauten Bürstenwalze mit Antriebsmotor;
- Fig. 6: eine Teilschnitt druch insgesmat dreizehn Bürstenwalzen, welche sich in ihrer horizontalen Ausgangsstellung befinden;
- Fig. 7: eine Prinzipdarstellung von abwechselnd aus einer gemeinsamen Horizontalebene verstellten Bürstenwalzen;
- Fig. 8: eine Prinzipdarstellung von unterschiedlich verstellten Bürstenwalzen;
- Fig. 9: drei Bürstenwalzen mit eingestelltem Spalt zwischen diesen Bürstenwalzen;
- Fig. 10: eine Draufsicht auf eine erfindungsgemäße Vorrichtung, bei welcher zwei benachbarte Bürstenwalzen gemeinsam vertikal verstellbar ausgebildet sind.

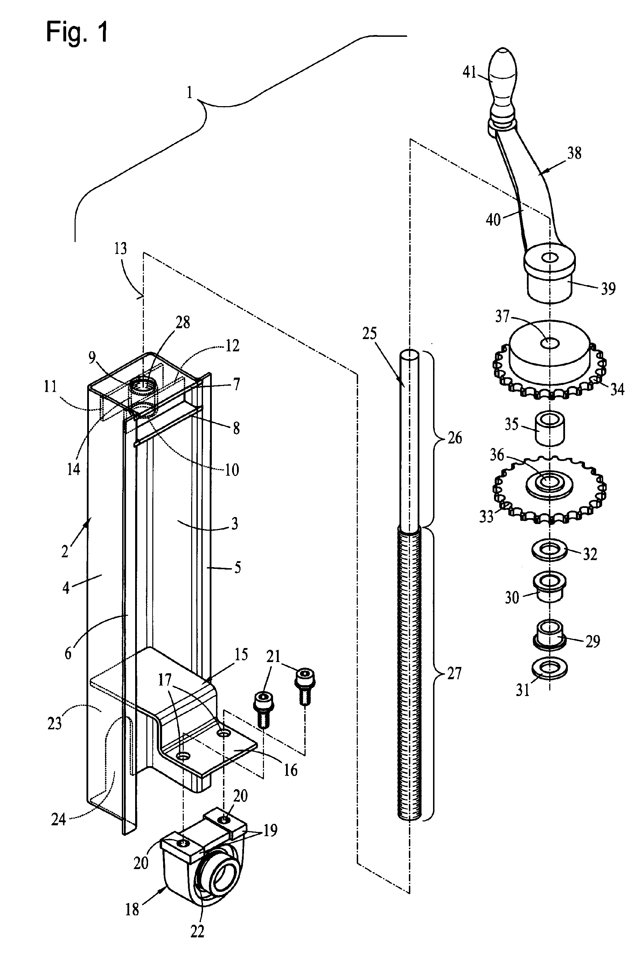

Fig. 1 zeigt eine perspektivische Explosionsdarstellung einer Stellvorrichtung 1, welche für eine erfindungsgemäße Vertikalverstellung von Bürstenwalzen vorgesehen ist.

Diese Stellvorrichtung 1 besteht aus einem mehrfach abgewinkelten Stellprofil 2, welches im Wesentlichen U-förmig ausgebildet ist. An seinen beiden U-Schenkeln 3 und 4 ist das Stellprofil 2 jeweils mit einer rechtwinklig nach außen abgebogenen Führungsleiste 5 bzw. 6 versehen.

In seinem oberen Endbereich weist das Stellprofil zwischen seinen beiden U-Schenkeln 3 und 4 zwei vertikal beabstandete Stützplatten 7 und 8 auf, welche zwischen die beiden U-Schenkel 3 und 4 beispielsweise eingeschweißt sind. Die beiden Stützplatten 7 und 8 sind jeweils mit einer zentralen Durchgangsbohrung 9 bzw. 10 versehen und werden etwa tangential zu diesen Durchgangsbohrungen 9 und 10 durch zwei vertikal ausgerichtete, sich zwischen den beiden U-Schenkeln 3 und 4 erstreckenden Distanzplatten 11 und 12 in Richtung der Längsmittelachse 13 der beiden Durchgangsbohrungen 9 und 10 axial stabilisiert.

Im Bereich der beiden Durchgangsbohrungen 9 und 10 ist desweiteren zwischen den beiden Distanzplatten 11 und 12 eine Gewindebuchse 14 feststehend eingesetzt. Dieser obere Kopfteil des Stellprofiles 2 mit den beiden Stützplatten 7 und 8 sowie den beiden Distanzplatten 11 und 12 und der Gewindebuchse 14 kann beispielsweise als Schweißkonstruktion ausgebildet sein.

Weiter ist aus Fig. 1 ersichtlich, dass im unteren Endbereich des Stellprofiles 2 zwischen den beiden U-Schenkeln 3 und 4 eine Lagerplatte 15 angeordnet ist, welche ebenfalls mit dem Stellprofil 2 verschweißt sein kann. Diese Lagerplatte 15 ist zweifach abgewinkelt ausgebildet und weist eine über die beiden Führungsleisten 5 und 6 nach außen hinaus stehende Aufnahmeplatte 16 auf. Diese Aufnahmeplatte 16 ist mit zwei Durchgangsbohrungen 17 versehen und dient zur feststehenden Montage eines Lagerbockes 18. Zur feststehenden Montage des Lagerbockes 18 an der Aufnahmeplatte 16 weist der Lagerbock 18 eine Montageplatte 19 auf, welche in ihren beiden Endbereichen jeweils mit einem Innengewinde 20 versehen ist. Über diese Innengewinde 20 ist der Lagerbock 18 unterseitig an der Aufnahmeplatte 16 mittels zweier Montageschrauben 21 feststehend montierbar. Weiter ist im Lagerbock 18 zur drehbaren Lagerung einer Antriebswelle einer Bürstenwalze ein entsprechendes Wälzlager 22 angeordnet.

Desweiteren ist aus Fig. 1 erkennbar, dass die Rückwand 23 des Stellprofiles 2 in ihrem unteren Endbereich einen Durchbruch 24 aufweist, welcher im Betrieb zur Durchführung der Antriebswelle einer Bürstenwalze dient.

Zur Vertikalverstellung dieses Stellprofiles 2 ist beim vorliegenden Ausführungsbeispiel eine Stellspindel 25 vorgesehen, welche in ihrem oberen Endbereich einen Lagerschaft 26 bildet, an welchen sich nach unten hin ein Stellgewinde 27 anschließt. Die Stellspindel 25 ist zur Vertikalverstellung des Stellprofiles 2 dementsprechend mit ihrem Stellgewinde 27 in das Innengewinde 28 der Gewindebuchse 14 einschraubbar.

Zur Lagerung der Stellspindel 25 mit ihrem Lagerschaft 26 in einem entsprechenden Rahmengestell sind beim vorliegenden Ausführungsbeispiel zwei Lagerbuchsen 29 und 30 sowie zwei Distanzscheiben 31 und 32 vorgesehen. Desweiteren sind auf dem Lagerschaft 26 der Stellspindel 25 zwei Zahnräder 33 und 34 montierbar, welche über eine Distanzbuchse 35 in einem vorbestimmten Abstand auf dem Lagerschaft 26 gehalten werden. Dabei ist vorgesehen, dass die beiden Zahnräder 33 und 34 drehfest mit dem Lagerschaft 26 der Stellspindel 25 verbindbar sind.

Für eine solche drehfeste Verbindung können bekannte Formschlußverbindungen oder auch Klemmverbindungen vorgesehen sein. Für eine klemmende drehfeste Halterung können die beiden Zahnräder 33 und 34 beispielsweise mit entsprechenden Klemmschrauben versehen sein. Andererseits können für eine Formschlußverbindung die beiden Durchgangsbohrungen 36 und 37 der beiden Zahnräder 33 und 34 auch mit einem Zahnprofil oder dgl. versehen sein, mit welchem sie auf eine entsprechende Außenverzahnung des Lagerschaftes 26 drehfest aufsteckbar sind (nicht explizit dargestellt).

Die Funktionsweise dieser beiden Zahnräder 33 und 34 wird später noch näher erläutert.

Zum drehenden Antrieb der Stellspindel 25 ist beim vorliegenden Ausführungsbeispiel eine Handkurbel 38 vorgesehen, welche auf das obere Ende des Lagerschaftes 26 lösbar aufgesteckt ist. Dazu weist die Handkurbel 38 eine entsprechende Lagerbuchse 39 auf, an welcher ein radial verlaufender Stellhebel 40 angeordnet ist. Dieser Stellhebel 40 ist in seinem äußeren Endbereich mit einem vertikal nach oben gerichteten Griffelement 41 versehen.

Die Stellvorrichtung 1 ist im montierten Zustand mit einem entsprechenden Rahmengestell der erfindungsgemäßen Vorrichtung in Eingriff bringbar und in diesem Rahmengestell vertikal verstellbar aufgenommen.

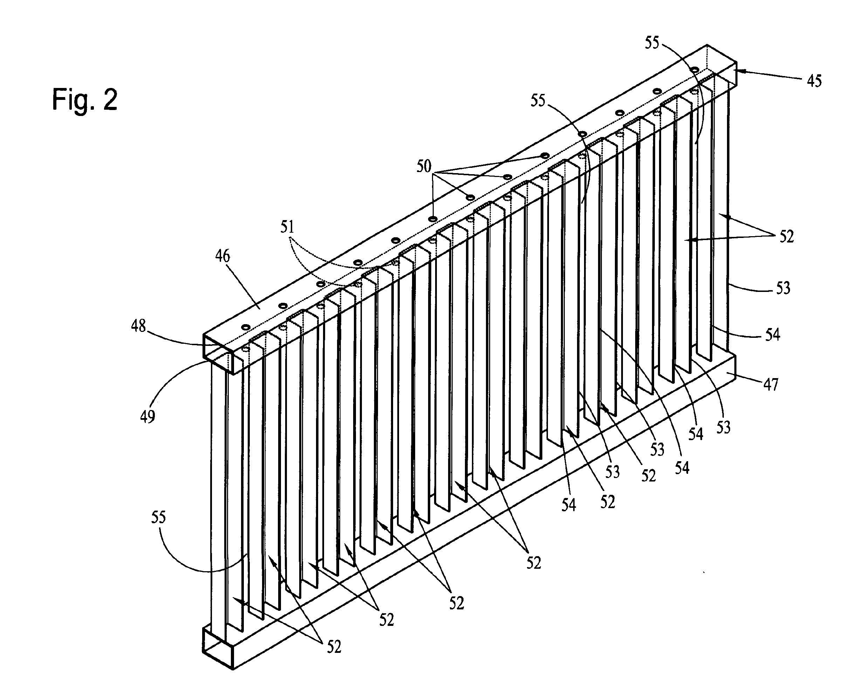

Fig. 2 zeigt beispielhaft eine Ausführungsform einer Seitenwand 45 eines solchen Rahmengestells. Wie aus Fig. 2 ersichtlich ist, weist diese Seitenwand 45 ein oberes und ein unteres Längsprofil 46 bzw. 47 auf, welche beim vorliegenden Ausführungsbeispiel als Kastenprofile ausgebildet sind. Zur Aufnahme von mehreren Stellspindeln 25 aus Fig. 1 ist das obere Längsprofil 46 in seinen oberen und unteren Stegwänden 48 und 49 mit entsprechenden Lagerbohrungen 50 und 51 versehen. Zur drehbaren Lagerung der Stellspindeln 25 aus Fig. 1 sind entsprechend in jede der Lagerbohrungen 50 die Lagerbuchsen 30 von oben einsetzbar. In die unteren Lagerbohrungen 51 werden dementsprechend die Lagerbuchsen 29 aus Fig. 1 eingesetzt und anschließend die Stellspindel 25 mit ihrem Lagerschaft 26 durch diese beiden Lagerbuchsen 29 und 30 hindurch gesteckt.

Weiter ist aus Fig. 2 ersichtlich, dass die beiden Längsprofile 46 und 47 über parallel zueinander und vertikal verlaufende U-förmige Führungsprofile 52 miteinander verbunden sind. Diese U-förmigen Führungsprofile 52 weisen beim vorliegenden Ausführungsbeispiel parallel zueinander verlaufende, nach außen gerichtete U-Schenkel 53 und 54 auf und sind mit den Längsprofilen 46 und 47 feststehend verschweißt.

Die Führungsprofile 52 bilden mit ihren benachbarten U-Schenkeln 53 und 54 jeweils vertikal verlaufende Führungsschlitze 55, in welche jeweils eine Stellvorrichtung 1 aus Fig. 1 vertikal verstellbar einsetzbar ist. Dementsprechend sind auch die Lagerbohrungen 50 und 51 des oberen Längsprofiles 46 im Bereich dieser vertikal verlaufenden Führungsschlitze 55 angeordnet.

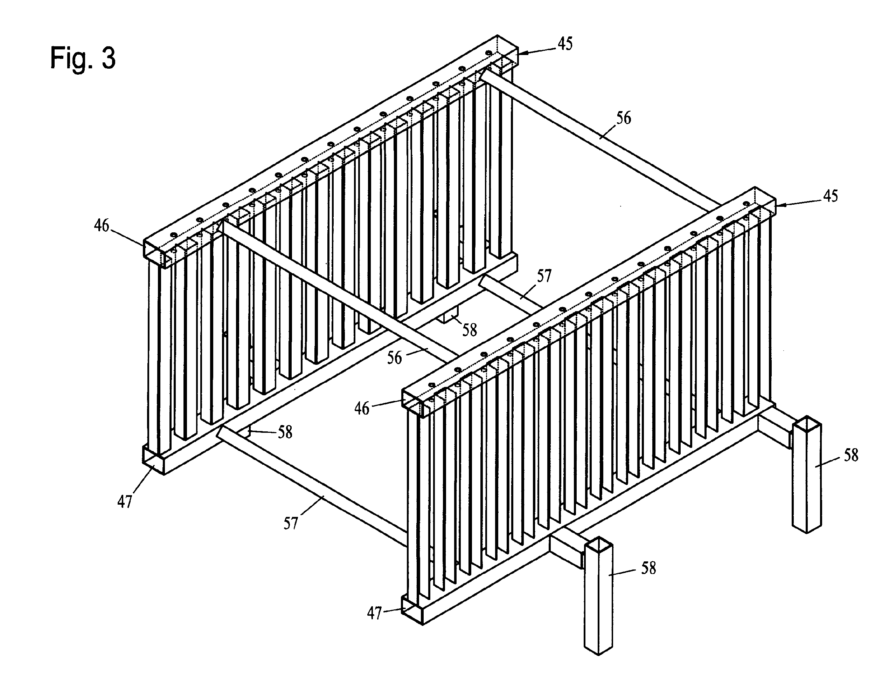

Zur Aufnahme und vertikal verstellbaren Lagerung einer Bürstenwalze über die Stellvorrichtung 1 aus Fig. 1 sind zwei solcher aus Fig. 2 ersichtliche Seitenwände 45 vorgesehen, wie dies aus Fig. 3 ersichtlich ist. Diese beiden Seitenwände 45 verlaufen mit ihren beiden Längsprofilen 46 und 47 parallel zueinander und werden durch entsprechende obere und untere Quertraversen 56 bzw. 57 im Abstand voneinander gehalten. Die vier Quertraversen 56 und 57 sind dabei innenseitig mit den oberen bzw. unteren Längsprofilen 46 und 47 der beiden Seitenwände 45 verschweißt, so dass die Gesamtkonstruktion äußerst stabil ausgebildet ist.

Je nach Einsatzbedingungen können außenseitig an den unteren Längsprofilen 47 noch Standfüße 58 vorgesehen sein, welche identisch ausgebildet sind.

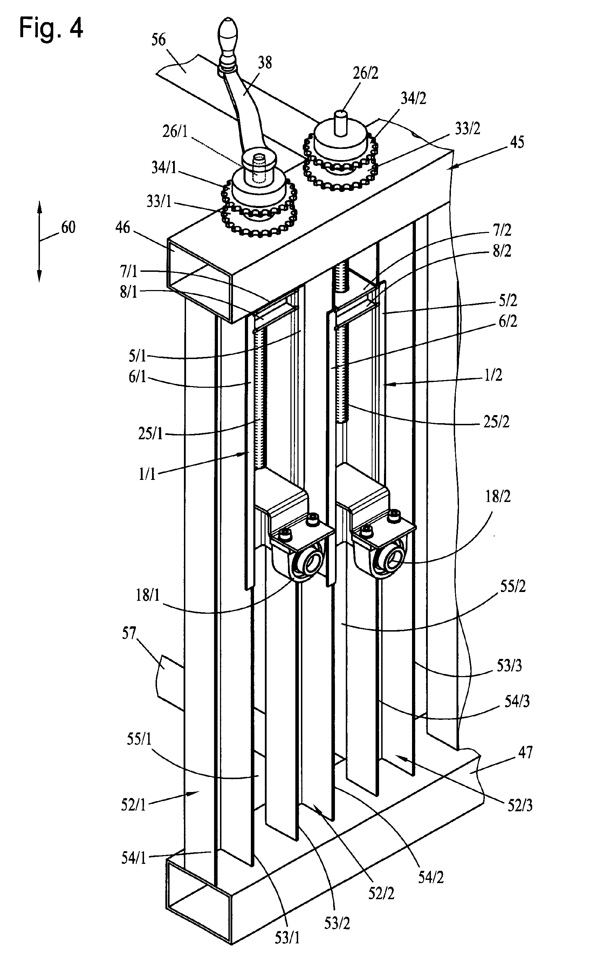

Fig. 4 zeigt den vorderen Endabschnitt der vorderen Seitenwand 45 aus Fig. 3 in vergrößertem Maßstab und mit zwei eingesetzten Stellvorrichtungen 1/1 und 1/2 in perspektivischer Darstellung.

In Fig. 4 sind dabei die Bezugszeichen entsprechend der sichtbaren Bauteile mit einer Erweiterungskennziffer versehen.

So ist aus Fig. 4 ersichtlich, dass die beiden Stellvorrichtungen 1/1 und 1/2 zwischen den beiden Führungsprofilen 52/1 und 52/2 bzw. 52/2 und 52/3 angeordnet sind. Dabei liegen die beiden Stellprofile 2/1 und 2/2 mit ihren vertikal verlaufenden Führungsleisten 5/1, 6/1 bzw. 5/2 und 6/2 eben auf den nach außen gerichteten Stirnflächen der jeweiligen U-Schenkel 53/1 und 54/1 bzw. 53/2 und 54/2 der jeweils benachbarten Führungsprofile 52/1 und 52/2 bzw. 52/2 und 52/3 an. Hierdurch wird eine einwandfreie Führung der beiden Stellprofile 2/1 und 2/2 zwischen den Führungsprofilen 52/1, 52/2 und 52/3 erreicht. Dabei können die Stellprofile 2/1 und 2/2 nicht nach vorne bzw. nach außen aus den Führungsschlitzen 55/1 und 5/2 herausrutschen, da diese im Betrieb über die beiden Lagerböcke 18/1 und 18/2 durch die in diesen aufgenommenen Antriebswellen einer Bürstenwalze in ihrer Position gehalten werden.

Desweiteren ist aus Fig. 4 ersichtlich, dass die Stellspindel 25/1 und 25/2 durch die Führungsplatten 7/1, 8/1 bzw. 7/2, 8/2 hindurch geschraubt sind und somit mit dem Stellprofil 2/1 bzw. 2/2 in getrieblicher Verbindung stehen.

Die Stellpindeln 25/1 und 25/2 durchragen dabei das obere Längsprofil 46 in vertikaler Richtung, so dass die beiden Zahnräder 33/1 und 34/1 bzw. 33/2 und 34/2 auf den jeweiligen Lagerschaft 26/1 bzw. 26/2 aufsteckbar und mit diesem feststehend in Eingriff bringbar sind, wie dies aus Fig. 4 ersichtlich ist.

Desweiteren ist in Fig. 4 beispielhaft für die Stellspindel 25/1 dargestellt, dass auf deren Führungsschaft 26/1 die Handkurbel 38 aufgesteckt und mit diesem in drehfester Verbindung steht. Diese Handkurbel 38 kann selbstverständlich wahlweise auch auf den Lagerschaft 26/2 der Stellspindel 25/2 aufgesetzt werden.

Es ist leicht vorstellbar, dass durch Drehung der Handkurbel 38 das Stellprofil 2 in vertikaler Richtung des Doppelpfeiles 60 verstellbar ist. So sind in Fig. 4 die beiden Stellprofile 2/1 und 2/2 in unterschiedlichen vertikalen Positionen dargestellt. Es ist nun ebenfalls leicht vorstellbar, dass eine Bürstenwalze, welche mit ihrer Antriebswelle entsprechend in den Lagerböcken 18/1 bzw. 18/2 aufgenommen wird, ebenfalls in Richtung des Doppelpfeiles 60 verstellt wird, sofern eine entsprechende Verstellung der Stellprofile 2/1 und 2/2 erfolgt.

Dabei ist eine solche Bürstenwalze selbstverständlich an beiden Enden ihrer Antriebswelle drehbar in einem solchen Lagerbock 18/1 und 18/2 gelagert und verläuft im normalen Betriebszustand mit ihrer Längsmittelachse im Wesentlichen horizontal quer zu den Längsprofilen 46 und 47.

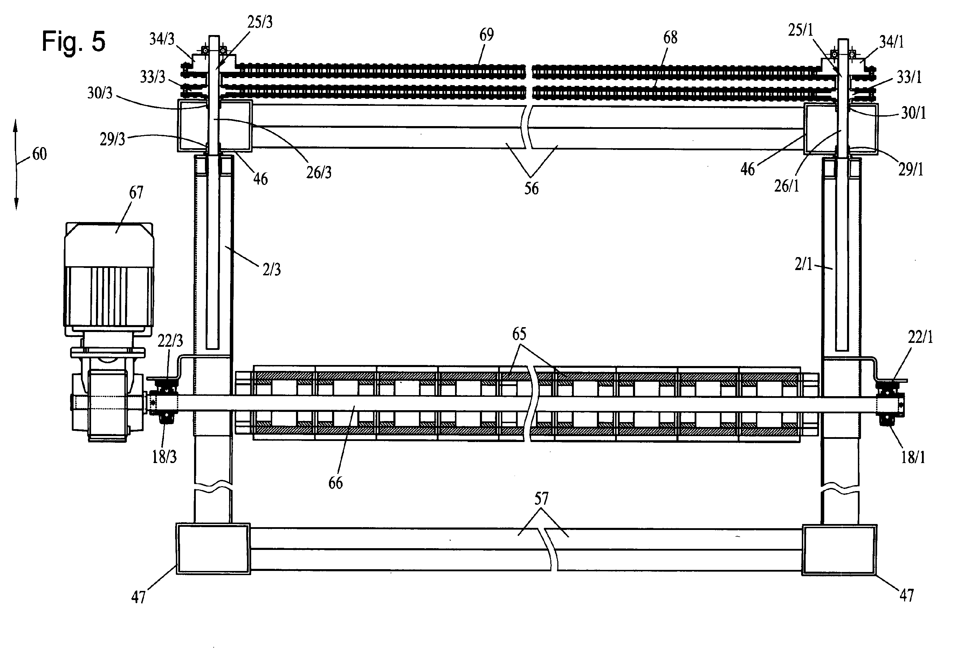

Eine solche Anordnung einer Bürstenwalze 65 mit ihrer Antriebswelle 66 ist beispielhaft in Fig. 5 im vertikalen Teilschnitt dargestellt. Es ist erkennbar, dass die Antriebswelle 66 auf der rechten Seite beispielsweise im Lagerbock 18/1 über ein Wälzlager 22/1 drehbar aufgenommen wird. Mit ihrem gegenüberliegenden Ende ist die Antriebswelle 66 in einem weiteren Lagerbock 18/3 über dessen Wälzlager 22/3 ebenfalls drehbar gelagert.

Dabei ist aus Fig. 5 ebenfalls ersichtlich, dass die beiden oberen Längsprofile 46 über die obere Quertraverse 56 feststehend miteinander verbunden sind, während die beiden unteren Längsprofile 47 über die untere Quertraverse 57 feststehend miteinander verbunden sind. Dabei bildet diese Einheit bestehend aus den Längsträgern 46 und 47 sowie den Quertraversen 56 und 57 eine stabile Einheit.

Auf der linken Seite ist in Fig. 5 ein Antriebsmotor 67 erkennbar, über welchen die Antriebswelle 66 der Bürstenwalze 65 drehend antreibbar ist.

Es ist leicht vorstellbar, dass durch Drehen der beiden Stellspindeln 25/1 und 25/3 beide Stellprofile 2/1 und 2/3 vertikal in Richtung des Doppelpfeiles 60 verstellbar sind. Um eine gleichmäßige Verstellung beider Stellprofile 2/1 und 2/3 mit ihren Lagerböcken 18/1 und 18/3 zu bewirken, sind beim vorliegenden Ausführungsbeispiel die Zahnräder 33/1 und 34/2 bzw. 33/3 und 34/3 vorgesehen. Die beiden unteren Zahnräder 33/1 und 33/2 stehen dabei über eine Antriebskette 68 und die beiden Zahnräder 33/2 und 34/3 über eine zweite Antriebskette 69 getrieblich miteinander in Verbindung.

Durch eine identische Ausgestaltung der Zahnräder 33/1, 34/1 und 33/3, 34/3 wird somit die Drehung beispielsweise der Stellspindel 25/1 identisch auf die Stellspindel 25/3 übertragen, so dass sich dementsprechend auch die gleichen Stellwege für die beiden Stellprofile 2/1 und 2/3 ergeben. Durch die Anordnung und Kopplung des Antriebsmotors 67 direkt mit der Antriebswelle 66 der Bürstenwalze 65 wird dieser zwangsläufig mit verstellt.

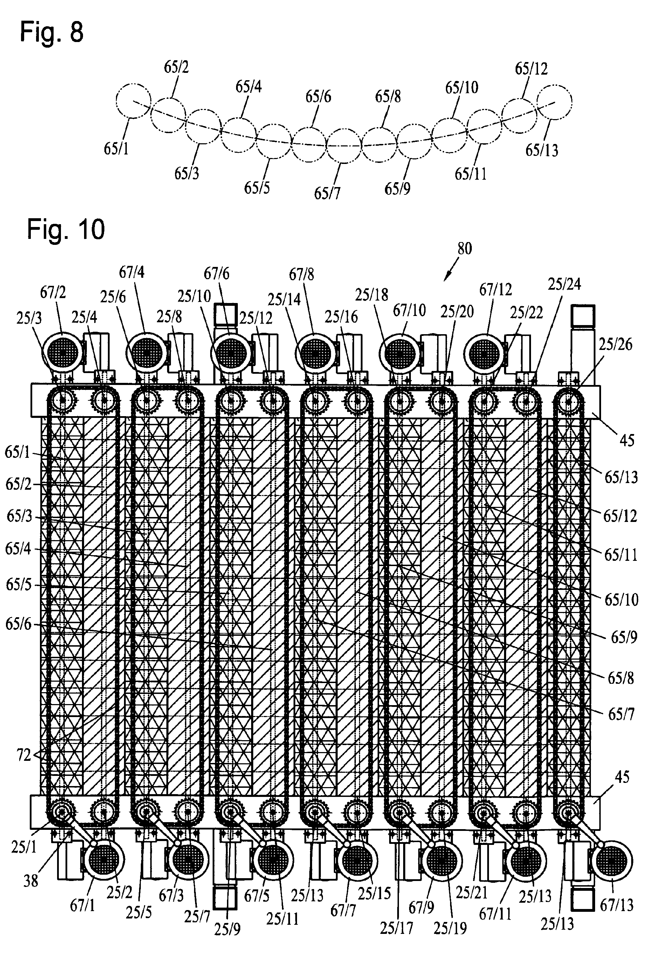

Dabei ist erfindungsgemäß für jede der vorgesehenen Bürstenwalzen ein separater Antriebsmotor vorgesehen, wie beispielsweise aus Fig. 10 ersichtlich ist.

Desweiteren ist aus Fig. 5 ebenfalls erkennbar, dass die beiden Stellspindeln 25/1 und 25/3 mit ihren jeweils zugehörigen Lagerschäften 26/1 und 26/3 in den entsprechenden, in den oberen Längsprofilen 46 eingesetzten Lagerbuchsen 29/1, 30/1 bzw. 29/3 und 30/3 gelagert sind.

Da die Zahnräder 33/1, 34/1 sowie 33/3 und 34/3 festsitzend auf den Lagerschäften 26/1 und 26/3 angeordnet sind, ist die jeweilige axiale Position der jeweiligen Stellspindel 25/1 und 25/3 im jeweiligen oberen Längsprofil 46 eindeutig festgelegt.

In dieser aus Fig. 5 ersichtlichen Anordnung sind nun, entsprechend der Ausgestaltung der beiden Seitenwände 45 aus Fig. 3 mehrere Bürstenwalzen in Längsrichtung der Längsprofile 46 und 47 hintereinander angeordnet.

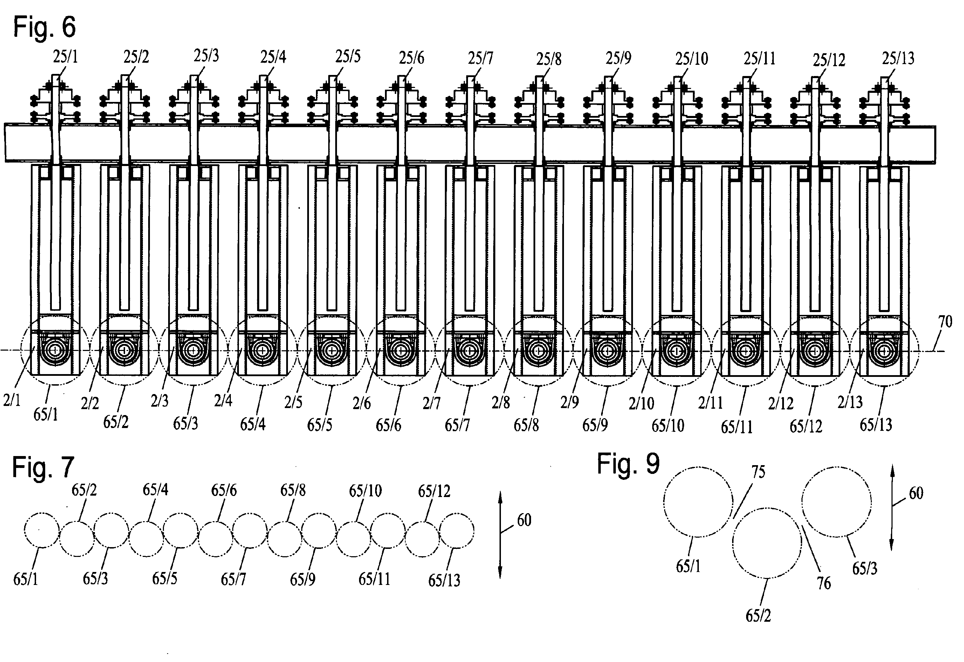

Eine solche prinzipielle Anordnung von insgesamt dreizehn solcher Bürstenwalzen 65/1 bis 65/13 ist aus Fig. 6 ersichtlich, wobei Fig. 6 einen Teilschnitt durch das obere Längsprofil 46 darstellt. Die Bürstenwalzen 65/1 bis 65/13 sind in Fig. 6 in Phantomlinien dargestellt.

Weiter zeigt Fig. 6 die Ausgangslage der Bürstenwalzen 65/1 bis 65/13, welche in dieser Ausgangslage dieselbe vertikale Position einnehmen und dementsprechend in einer gemeinsamen Horizontalebene 70 liegen.

Es ist leicht vorstellbar, dass durch entsprechende Drehung der Stellspindeln 25/1 bis 25/3 das entsprechend zugehörige Stellprofil 2/1 bis 2/13 vertikal separat verstellbar ist. Aufgrund der Kopplung über die Antriebsketten, wie aus Fig. 5 ersichtlich, wird dabei dementsprechend ebenfalls gleichzeitig die in Querrichtung im zweiten Längsprofil 46 aufgenommene, zugehörige Stellspindel 25/3 in gleicher Richtung verstellt.

Durch die Einzelverstellung der Bürstenwalzen 65/1 bis 65/13 können somit unterschiedliche Positionsprofile der einzelnen Bürstenwalzen eingestellt werden.

Dabei zeigt Fig. 7 beispielhaft eine Anordnung, bei welcher jede zweite Bürstenwalze 65/2, 65/4, 65/6, 65/8, 65/10, 65/12 um einen gewissen Betrag abgesenkt wurde. Dadurch bilden sich zwischen den benachbarten Bürstenwalzen 65/1, 65/3 bzw. 65/3, 65/5 bzw. 65/5, 65/7 bzw. 65/7, 65/9 bzw. 65/9, 65/11 zw. 65/11, 65/13 entsprechende Vertiefungen, so dass sich in diesen Vertiefungen zu reinigende Feldfrüchte ansammeln können.

Diese Ansammlung erfolgt so lange, bis der beispielsweise durch die drei Bürstenwalzen 65/1, 65/2 und 65/3 gebildete "Aufnahmeraum" gefüllt ist und somit die Feldfrüchte erst dann weiter gefördert werden, um in den nächsten Aufnahmeraum zu gelangen. Dies bedeutet, dass bei einer solchen "wellenförmigen" Anordnung der Bürstenwalzen 65/1 bis 65/13 die Verweildauer der Feldfrüchte im Bereich der Bürstenwalzen erheblich vergrößert wird, so dass hierdurch die Reinigungswirkung dementsprechend ebenfalls vergrößerbar ist.

Anstatt einer solchen abwechselnd aufeinanderfolgenden Absenkung, können die Bürstenwalzen entsprechend auch in einem bogenförmigen Verlauf zueinander angeordnet sein, wie dies aus Fig. 8 ersichtlich ist.

Die Bürstenwalzen 65/1 bis 65/13 bilden zusammen, wie in Fig. 8 dargestellt, einen einheitlichen "wannenförmigen" Aufnahmeraum, wodurch ebenfalls der Füllungsgrad der durch die Bürstenwalzen 65/1 bis 65/13 gebildete Transportbahn eine gewisse Anhäufung der Feldfrüchte bewirkt. Auch hierdurch ist eine höhere Verweildauer wie auch ein höherer Belastungsdruck der Feldfrüchte aufgrund deren mehrfachen Schichtung oberhalb der Bürstenwalzen erreichbar, so dass die Reinigungswirkung aufgrund dieser höheren Vertikallast und auch aufgrund der höheren Verweildauer bei Bedarf erheblich verbessert werden kann.

Je nach zu reinigendem Gut sind die Bürstenwalzen 65/1 bis 65/13 in beliebigen aufeinanderfolgenden vertikalen Positionen anordenbar, so dass sich unterschiedliche Reinigungswirkungen und Verweildauern des zu reinigenden Gutes einstellen lassen.

Da die Bürstenwalzen im Durchmesser derart ausgebildet sind, dass sie sich, wie dies aus Fig. 6 ersichtlich ist, bei Anordnung in gleicher vertikaler Position gegenseitig zumindest berühren, ist durch das Absenken einzelner dieser Bürstenwalzen 65/1 bis 65/13 auch ein Spalt zwischen den Bürstenwalzen einstellbar, wie dies beispielhaft aus Fig. 9 für die Bürstenwalzen 65/1, 65/2, 65/3 ersichtlich ist.

Es ist erkennbar, dass zwischen den Bürstenwalzen 65/1, 65/2 und 65/3 jeweils ein Spalt 75 bzw. 76 ausgebildet ist. Durch Veränderung der Größe dieser Spalte 75 und 76 durch entsprechende Vertikalverstellung in Richtung des Doppelpfeiles 60, beispielsweise der mittleren Bürstenwalze 65/2, kann die erfindungsgemäße Vorrichtung auch als Sortiervorrichtung für Feldfrüchte unterschiedlicher Größe eingesetzt werden.

Fig. 10 zeigt eine schematische Draufsicht auf eine fertig montierte erfindungsgemäße Vorrichtung 80.

Es ist erkennbar, dass jeder Bürstenwalze 65/1, 65/2, 65/3, 65/4, 65/5, 65/6, 65/7, 65/8, 65/9, 65/10, 65/11, 65/12 und 65/13 ein separater Antriebsmotor 67/1, 67/2, 67/3, 67/4, 67/5, 67/6, 67/7, 67/8, 67/9, 67/10, 67/11, 67/12, und 67/13 zugeordnet ist. Dabei sind die Antriebsmotoren 67/1 bis 67/13 wechselseitig zu beiden Seiten der beiden Seitenwände 45 der Vorrichtung 80 angeordnet. Dies' kann aus raumsparenden Gründen notwendig sein.

Desweiteren ist aus Fig. 10 erkennbar, dass auch zwei Bürstenwalzen 65/1 und 65/2 gleichzeitig verstellbar sein können. Hierzu ist beispielsweise eine Antriebskette 72 vorgesehen, welche die Zahnräder zweier jeweils benachbarter Stellspindeln 25/1 und 25/2 bzw. 25/3 und 25/4 gemeinsam umschließt. Es ist leicht vorstellbar, dass alle diese Stellspindeln 25/1 bis 25/4 durch Drehung, beispielsweise der Stellspindel 25/1 über die Handkurbel 38 gleichsinnig mitgedreht werden, so dass in diesem Falle die beiden Bürstenwalzen 65/1 und 65/2 paarweise gleichzeitig in ihrer vertikalen Position verstellbar sind. Eine solche Verstellbarkeit kann beispielsweise auch für die weiteren Bürstenwalzen 65/3 bis 65/12 vorgesehen sein, sofern diesen jeweils eine zweite Bürstenwalze benachbart ist, wie dies aus Fig. 10 erkennbar ist. Weiter können die weiteren Stellspindeln 25/5 bis 25/26 ebenfalls in Vierergruppen oder paarweise angetrieben sein, wie dies aus Fig. 10 ersichtlich ist.

Für einige Anwendungsfälle kann eine solche Ausgestaltung durchaus vorteilhaft sein, da beispielsweise durch Absenken zweiter Bürstenwalzen ein entsprechend größerer Aufnahmeraum zwischen den diesen benachbarten Bürstenwalzen geschaffen wird und somit ebenfalls mehr zu reinigendes Gut in diesen Aufnahmeraum einbringbar und dort reinigbar ist.

Es ist erkennbar, dass durch die erfindungsgemäße Ausgestaltung eine äußerst variabel einsetzbare, insbesondere auf das zu reinigende Gut einstellbare Vorrichtung zum Reinigen von Feldfrüchten zur Verfügung gestellt wird. Diese Vorrichtung ist in einfacher Weise durch Vertikalverstellung einzelner oder aller Bürstenwalzen in unterschiedliche oder ähnliche vertikale Positionen dem jeweils erforderlichen Reinigungsprozess von Feldfrüchten in einfachster Weise anpassbar.

Dabei kann ebenfalls vorgesehen sein, dass die Antriebsmotoren 67/1 bis 67/13 mit Frequenzumformern ausgestattet und separat bezüglich ihrer Drehzahl und auch Drehrichtung ansteuerbar sind. Auch durch diese Maßnahme lassen sich wiederum unterschiedliche Reinigungswirkungen und Durchlaufgeschwindigkeiten einstellen.

## Patentansprüche

1. Vorrichtung (80) zum Reinigen von Feldfrüchten bestehend aus mehreren, eine Transportbahn bildenden, in einer Durchlaufrichtung der Feldfrüchte hintereinander liegenden Bürstenwalzen (65, 65/1, 65/2, 65/3, 65/4, 65/5, 65/6, 65/7, 65/8, 65/9, 65/10, 65/11, 65/12, 65/13), welche drehend antreibbar sind und welche in einer Ausgangsstellung in einer gemeinsamen Horizontalebene (70) liegen,
**dadurch gekennzeichnet,**
**dass** die Bürstenwalzen (65 bis 65/13) einzeln oder in Gruppen aus der Horizontalebene vertikal verstellbar sind.

2. Vorrichtung nach Anspruch 1, **dadurch gekennzeichnet, dass** die Bürstenwalzen (65) mit den Enden ihrer Antriebswellen (66) jeweils in einem vertikal verlaufenden Stellprofil (2, 2/1 bis 2/13) drehbar gelagert sind und,
dass die Stellprofile (2, 2/1 bis 2/13) vertikal verstellbar in den Seitenwänden (45) eines Grundgestells vertikal verstellbar aufgenommen sind.

3. Vorrichtung nach Anspruch 2, **dadurch gekennzeichnet**, **das** die Seitenwände (45) aus einem oberen und unteren Längsprofil (46, 47) gebildet sind und, dass zur vertikalen Führung der Stellprofile (2/1, 2/2 bis 2/13) zwischen den Längsprofilen (46, 47) vertikal verlaufende Führungsprofile (52, 52/1, 52/2, 52/3) vorgesehen sind, zwischen welchen die Stellprofile (2/1, 2/2 bis 2/13) vertikal verstellbar geführt sind.

4. Vorrichtung nach Anspruch 3, **dadurch gekennzeichnet, dass** zur Vertikalverstellung der Stellprofile (2/1, 2/2 bis 2/13) zwischen den Führungsprofilen (52/1, 52/2, 52/3) Spindelantriebe (25, 25/1 bis 25/26) vorgesehen sind, welche in den oberen Längsprofilen (46) drehbar gelagert sind.

5. Vorrichtung nach Anspruch 4, **dadurch gekennzeichnet, dass** die Spindelantriebe Stellspindeln (25, 25/1 bis 25/26) aufweisen, welche die oberen Längsprofile (46) von unten nach oben durchragen und, dass auf das obere Ende der Stellspindeln (25, 25/1 bis 25/26) manuell oder mechanisch betätigbare Antriebselemente (38) aufsetzbar sind.

6. Vorrichtung nach Anspruch 4 oder 5, **dadurch gekennzeichnet, dass** die beiden Stellspindeln (25/1, 25/3) der beiden die beiden Enden der Antriebswelle (66) aufnehmenden Stellprofile (2/1, 2/3) zur gleichzeitigen Vertikalverstellung über einen Kettentrieb (33/1, 34/1, 33/3, 34/3, 68, 69) oder einen Zahnriementrieb oder Winkelgetriebe miteinander gekoppelt sind.

7. Vorrichtung nach Anspruch 6, **dadurch gekennzeichnet, dass** über den Kettentrieb (72) oder den Zahnriementrieb oder das Winkelgetriebe die Stellspindeln (25/1, 25/2 bzw. 25/3, 25/4) zweier benachbarter Bürstenwalzen (65/1, 65/2) gleichzeitig antreibbar sind.

8. Vorrichtung nach einem der Ansprüche 1 bis 7, **dadurch gekennzeichnet, dass** die Bürstenwalzen (65, 65/1, 65/2, 65/3, 65/4, 65/5, 65/6, 65/7, 65/8, 65/9, 65/10, 65/11, 65/12, 65/13) durch einen separaten Antriebsmotor (67, 67/1, 67/2, 67/3, 67/4, 67/5, 67/6, 67/7, 67/8, 67/9, 67/10, 67/11, 67/12, 67/13) einzeln oder gruppenweise drehend angetrieben sind.

9. Vorrichtung nach Anspruch 8, **dadurch gekennzeichnet, dass** die Antriebsmotoren (67 bis 67/13) mit einem Frequenzumformer ausgestattet sind.

10. Vorrichtung nach Anspruch 8 oder 9, **dadurch gekennzeichnet, dass** die Antriebsmotoren (67 bis 67/13) bezüglich ihrer Drehgeschwindigkeit sowie ihrer Drehrichtung separat ansteuerbar sind.
